# EUROPÄISCHE PATENTSCHRIFT

(11) **EP 3 256 743 B1**
(45) Veröffentlichungstag und Bekanntmachung des Hinweises auf die Patenterteilung: **31.07.2019**
(21) Anmeldenummer: 16701252.5
(22) Anmeldetag: 20.01.2016
(51) Int. Cl.: F15B 20/00, F15B 13/044, F16K 31/04, F16K 31/05

(54) **VENTIL MIT EINEM IN EINEM VENTILGEHÄUSE LÄNGSVERFAHRBAR GEFÜHRTEN STEUERSCHIEBER**
VALVE HAVING A CONTROL SLIDE GUIDED IN A VALVE HOUSING SO AS TO BE LONGITUDINALLY MOVABLE
SOUPAPE POURVUE D'UN TIROIR DE DISTRIBUTION GUIDÉ MOBILE LONGITUDINALEMENT DANS UN CORPS DE SOUPAPE

(30) Priorität: 13.02.2015 DE 102015001883
(43) Veröffentlichungstag der Anmeldung: 20.12.2017
(73) Patentinhaber: HYDAC Systems & Services GmbH, 66280 Sulzbach (DE)
(72) Erfinder: BIWERSI, Sascha Alexander, 66693 Mettlach (DE); HETTIGER, Marcus, 66740 Saarlouis (DE); STÖNNER, Christoph, 66386 St. Ingbert (DE)
(74) Vertreter: Bartels und Partner, Patentanwälte
(86) Internationale Anmeldenummer: PCT/EP2016/000097
(87) Internationale Veröffentlichungsnummer: WO 2016/128106

(56) Entgegenhaltungen:
- WO-A2-2012/126767
- DE-A1- 3 704 312
- DE-U1-202011 103 482
- US-A- 4 437 388

## Beschreibung

Die Erfindung betrifft ein Ventil mit einem in einem Ventilgehäuse längsverfahrbar geführten Steuerschieber nach dem Oberbegriff von Patentanspruch 1.

Bei Ventilen für hydraulische Anwendungen wurden im Laufe der Zeit verschiedene Betätigungsarten entwickelt, wobei die Spanne von rein manueller Ansteuerung mit Handhebel über direkte elektromagnetische Ansteuerung oder hydraulische Vorsteuerung bis hin zu hoch dynamischen Servoantrieben reicht. Im Stand der Technik ist in letzter Zeit als weitere Ventilbetätigung die elektromechanische Ansteuerung mittels eines Schrittmotors hinzugekommen. Die US-Patentschrift 7,591,448 B2 offenbart eine diesbezügliche Lösung für ein Ventil. Derartige Lösungen bewähren sich zunehmend für mobile Anwendungen, wie Baumaschinen, Landmaschinen, Stapler, Krane oder andere Arbeitsmaschinen. Allerdings werden diese Lösungen den an die Arbeitssicherheit zu stellenden Anforderungen nicht immer gerecht, weil im Falle des Versagens des Schrittmotors oder Ausfall oder Störung des elektrischen Systems zwar das Ventil in eine sichere Neutralstellung zurückkehrt, dass aber die Gefahr besteht, dass die betreffende Maschine nicht in einen sicheren Zustand gebracht werden kann und in einem die Umgebung gefährdenden Zustand verbleibt.

DE 20 2011 103 482 U1 offenbart ein Servomodul mit einem Hebel, der drehbar bzw. schwenkbar um eine erste Achse gelagert ist, wobei
- der erste Arm des Hebels um eine zweite Achse drehbar bzw. schwenkbar verbunden ist mit Antriebsmitteln eines Elektromotors;
- der zweite Arm des Hebels mit Ansteuermitteln verbunden werden kann, die zur Ansteuerung eines Ventils oder dergleichen dienen.

Für die Funktion des Servomoduls können verschiedene Arten von Elektromotoren verwendet werden. Besonders günstig sind Servomotoren, die zwar an sich eine Rotationsbewegung erzeugen, welche jedoch durch geeignete Übertragungsmittel in eine translatorische Bewegung übersetzt werden kann. Stattdessen können auch Linear- oder Schrittmotoren verwendet werden, die von vornherein eine translatorische Bewegung erzeugen.

Aus DE 37 04 312 A1, US 4 437 388 A und WO 2012/126767 A2 sind weitere Ventile bekannt, jeweils mit einem in einem Ventilgehäuse längsverfahrbar geführten Steuerschieber.

Im Hinblick hierauf stellt sich die Erfindung die Aufgabe, ein Ventil der eingangs genannten Gattung zur Verfügung zu stellen, das die Gefahr der Gefährdung in einem derartigen Störfall vermeidet. Gemäß dem kennzeichnenden Teil des Patentanspruchs 1 ist diese Aufgabe bei einem Ventil der eingangs genannten Gattung dadurch gelöst, dass der Steuerschieber für die Ventilbetätigung mittels des Schrittmotors zwischen einer Zahnstange des Schrittmotors und der Steuerstange der Noteinrichtung im Ventilgehäuse verfahrbar aufgenommen ist, dass die Zahnstange mit einem mit dem Schrittmotor gekoppelten Zahnritzel in Zahneingriff ist und dass die Betätigung von Hand vorzugsweise über einen am freien Ende der Steuerstange angeordneten Notfallknopf ermöglicht wird.

Erfindungsgemäß ist hierbei die manuell betätigbare Noteinrichtung vorgesehen, so dass ein unmittelbarer Eingriff seitens einer Bedienperson erfolgen kann und daher für gegebenenfalls erforderliche Sicherheitsmaßnahmen nicht auf eine, möglicherweise wiederum störanfällige, Bedieneinrichtung zurückgegriffen werden muss.

Für die Ventilbetätigung mittels des Schrittmotors ist der Steuerschieber zwischen einer Zahnstange des Schrittmotors und der Steuerstange der Noteinrichtung im Ventilgehäuse verfahrbar aufgenommen, wobei die Zahnstange mit einem mit dem Schrittmotor gekoppelten Zahnritzel in Zahneingriff ist.

Erfindungsgemäß ist die Anordnung diesbezüglich so getroffen, dass der Steuerschieber an seinem einen freien Ende mit einer Steuerstange verbunden ist, die aus dem Ventilgehäuse herausgeführt mit ihrem freien Ende eine Betätigung von Hand, vorzugsweise über einen am freien Ende der Steuerstange angeordneten Notfallknopf, ermöglicht. Dadurch ist eine einfache und kompakte Noteinrichtung realisierbar.

Bei besonders vorteilhaften Ausführungsbeispielen durchgreift die Steuerstange der Noteinrichtung einen Energiespeicher, insbesondere in Form einer Druckfeder, die sich mit ihrem einen freien Ende an einer Führung des Steuerschiebers oder an Teilen davon und sich mit ihrem anderen Ende an einer Aufnahmehülse abstützt, die gleichfalls von der Steuerstange durchgriffen ist.

Die Anordnung kann dabei so getroffen sein, dass die Aufnahmehülse an ihrem einen freien Ende eine Querschnittsverringerung aufweist, die eine Anschlagstelle für die Steuerstange der Noteinrichtung bildet, die, mit einer Querschnittsverbreiterung versehen, gegen die Anschlagstelle verfahrbar in einer Endkappe des Ventilgehäuses geführt ist. Die axiale Länge der Aufnahmehülse kann hierbei derart gewählt sein, dass mit Erreichen der Anschlagstelle durch die Steuerstange der Steuerschieber in seine die Fluidanschlussstellen im Ventilgehäuse voneinander trennende Sperrstellung gelangt. Dabei kann es sich um eine zentrierte Nullstellung des Steuerschiebers handeln, die dem sicheren Zustand entspricht.

Die axiale Länge der Aufnahmehülse kann mit Vorteil weiterhin derart gewählt sein, dass mit Bewegen der Querschnittsverbreiterung der Steuerstange vom Schrittmotor weg der Steuerschieber entgegen der Wirkung des Energiespeichers eine weitere von der Sperrstellung verschiedene Betriebsstellung einnimmt, in der zumindest ein Teil der Fluidanschlussstellen miteinander verbunden ist. Bei der hierzu entgegengesetzten Bewegungsrichtung der Steuerstange auf den Schrittmotor zu hebt mittels der an der Anschlagstelle anliegenden Querschnittsverbreiterung die Aufnahmehülse entgegen der Wirkung des Energiespeichers von ihrer weiteren Anschlagposition an der Endkappe ab, und der Steuerschieber gelangt, der Bewegung der Steuerstange nachfolgend, in eine weitere Betriebsstellung, die von der Sperrstellung und der einen Betriebsstellung verschieden ist, in der zumindest ein Teil der Fluidanschlussstellen miteinander verbunden ist.

Hinsichtlich der Bauweise des Ventilgehäuses kann die Anordnung mit besonderem Vorteil so getroffen sein, dass der Steuerschieber eine Führung durchgreift, die, zweiteilig ausgebildet, mit einem Führungsteil der endseitigen Längsführung des Steuerschiebers in diesem Bereich dient und mit einer sich am Führungsteil abstützenden Steuerscheibe ein Widerlager für die Abstützung des einen Endes des Energiespeichers der Noteinrichtung bildet.

Ein derartiges Ventil kann mit Vorteil als 4/3-Wege-Schiebeventil konzipiert sein, wobei hierfür das Ventilgehäuse Fluidanschlussstellen in Form eines Druckversorgungsanschlusses, zweier Tankanschlüsse und zweier Nutzanschlüsse aufweist.

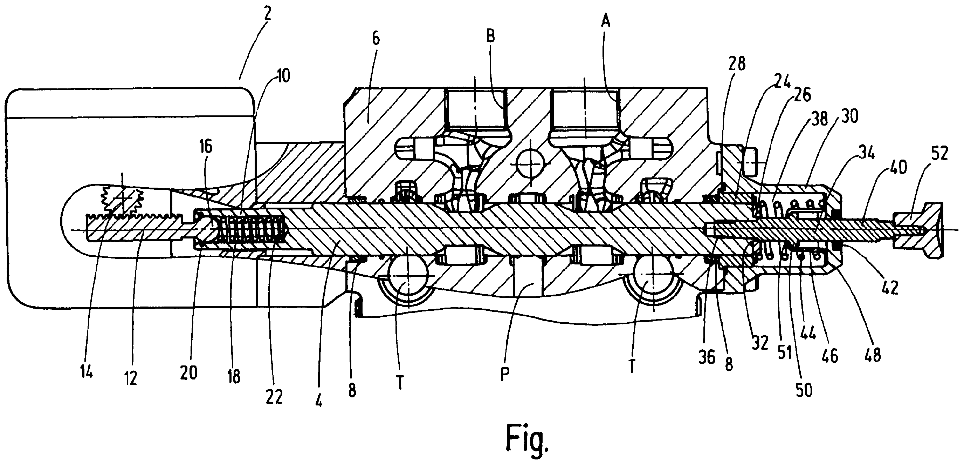

Nachstehend ist die Erfindung anhand eines in der beigefügten Zeichnung dargestellten Ausführungsbeispiels im Einzelnen erläutert, deren einzige Figur das Ausführungsbeispiel in einem abgebrochen gezeichneten Längsschnitt zeigt, wobei vom zugehörigen Schrittmotor lediglich ein abtriebsseitiges Zahnritzel nebst Zahnstange gezeigt sind.

Unter Bezugnahme auf die Figur ist die Erfindung am Beispiel eines 4/3-Wege-Schieberventils erläutert, das, ohne hydraulische Vorsteuerung, entsprechend dem in der genannten US-Patenschrift 7,591,448 B2 offenbarten Stand der Technik mittels eines als Ganzes mit 2 bezeichneten Schrittmotors elektrisch betätigbar ist. Ein im Ventilgehäuse 6 längsverschiebbar geführter Steuerschieber 4 ist in der Figur in seiner zentrierten, dem sicheren Zustand eines angeschlossenen Systems entsprechenden Nullstellung gezeigt, in der alle am Ventilgehäuse 6 befindlichen Fluidanschlüsse, nämlich ein Druckanschluss P, Nutzanschlüsse A und B sowie Tankanschlüsse T voneinander getrennt sind. Um zu vermeiden, dass der Steuerschieber 4 im Betrieb an seinen Stirnseiten durch Leckageströme mit Druck beaufschlagt wird, was ungewollte Stellkräfte am Steuerschieber 4 zur Folge hätte, sind die beiden Endbereiche des Steuerschiebers 4 über Dichtelemente 8 aus dem Ventilgehäuse 6 herausgeführt. Für die Betätigung durch den Schrittmotor 2 ist der Schieber 4 mit seinem in der Figur links gelegenen Endbereich 10 mit der Zahnstange 12 des Schrittmotors 2 in Verbindung, der, dem genannten Stand der Technik entsprechend, die Zahnstange 12 über ein Zahnritzel 14 translatorisch bewegt. Für die Kopplung des Endbereichs 10 mit der Zahnstange 12 weist diese am Verbindungsende einen Kugelkopf 16 auf, der in eine koaxiale Sackbohrung 18 im Endbereich 10 eingreift und gegen Austritt aus der Sackbohrung 18 durch einen Sprengring 20 gesichert ist. Für die spielfreie Anlage des Kugelkopfes 16 am Sprengring 20 befindet sich in der Sackbohrung 18 eine Druckfeder 22.

An seinem dem Schrittmotor 2 entgegengesetzten Endbereich ist der Steuerschieber 4 über eine zweiteilig ausgebildete Führungseinrichtung aus dem Ventilgehäuse 6 herausgeführt. Diese Führungseinrichtung weist eine die eigentliche Längsführung für den Steuerschieber 4 bildende Führungshülse 24, die sich am äußeren Ende des Ventilgehäuses 6 an das Dichtelement 8 anschließt, sowie eine an der Außenseite der Führungshülse 24 anliegende Steuerscheibe 26 auf. Die Führungshülse 24 ist in ihrem aus dem Ende des Ventilgehäuses 6 vorstehenden Teil vom Verbindungsflansch 28 einer mit dem Ende des Ventilgehäuses 6 verschraubten Gehäuse-Endkappe 30 umfasst. Die Steuerscheibe 26 weist eine zentrale Öffnung 32 auf, durch die sich eine Steuerstange 34 hindurch erstreckt, die mit einer Gewindebohrung 36 im Steuerschieber 4 verschraubt ist. Die Steuerstange 34 erstreckt sich durch den ein kreiszylindrisches Federgehäuse bildenden Innenraum 38 der Endkappe 30 hindurch und tritt mit einem vorstehenden Betätigungsabschnitt 40 über ein am Ende der Endkappe 30 befindliches Dichtelement 42 aus dieser aus.

Im Innenraum 38 der Endkappe 30 befindet sich ein Energiespeicher in Form einer Druckfeder 44, die sich mit einem Ende an der ein Widerlager bildenden Steuerscheibe 26 abstützt, die am stirnseitigen Ende des Steuerschiebers 4 anliegt. Die die Steuerstange 34 umgebende Druckfeder 44 umgibt auch die Außenseite einer von der Steuerstange 34 durchgriffenen Aufnahmehülse 46, die an ihrem vom Steuerschieber 4 entfernten Ende einen radial nach außen vorstehenden Rand 48 besitzt, der das zweite Widerlager für die Druckfeder 44 bildet. Bei dem in der Figur gezeigten Zustand, der der zentrierten Nullstellung und einem sicheren Zustand des Ventils entspricht, liegt der Endrand 48der Aufnahmehülse 46 am Ende des Innenraums 38 an der Endkappe 30 an. Gleichzeitig liegt die Steuerstange 34 mit einer Querschnittsverbreiterung 50 am inneren Rand der demgegenüber im Durchmesser verringerten Durchgangsöffnung 51 der Aufnahmehülse 46 an. Wird bei einer Steuerbewegung der Steuerschieber 4 aus der gezeigten Nullstellung in Richtung auf den Schrittmotor 2 betätigt, um den Druckanschluss P mit dem Nutzanschluss A und einen Tankanschluss T mit dem Nutzanschluss B zu verbinden, dann hebt die von der Querschnittsverbreiterung 50 der Steuerstange 34 mitgenommene Aufnahmehülse 46 von der Anlage am Ende der Endkappe 30 ab. Der Steuerschieber 4 bewegt sich also gegen die Wirkung der Druckfeder 44 in der Figur nach links.

Wird der Steuerschieber 4 für eine vom Schrittmotor 2 weg gerichtete Bewegung aus der gezeigten Nullstellung heraus betätigt, dann hebt die Querschnittsverbreiterung 50 vom Rand der Öffnung 51 der Aufnahmehülse 46 ab und bewegt sich innerhalb der Aufnahmehülse 46 in der Figur nach rechts, wobei diese Bewegung entgegen der Wirkung der Druckfeder 44 erfolgt, da sich das durch die Steuerscheibe 26 gebildete Widerlager mit dem Steuerschieber 4 nach rechts bewegt. Die axiale Länge der Aufnahmehülse 46 ist so bemessen, dass der Steuerschieber 4 ausreichend weit verschiebbar ist, um den Druckanschluss P mit dem Nutzanschluss B und den Nutzanschluss A mit einem Druckanschluss T zu verbinden.

Wie erwähnt, ist die Steuerstange 34 mit dem Betätigungsabschnitt 40 aus der Endkappe 30 herausgeführt und dadurch für eine Notbetätigung des Ventils zugänglich. Beim gezeigten Beispiel ist für eine direkte manuelle Notbetätigung ein am Ende des Betätigungsabschnitts 40 der Steuerstange 34 befestigter Notfallknopf 52 angeordnet. Die gezeigte Bauweise, bei der Steuerstange 34 und Betätigungsabschnitt 40 einteilig ausgebildet sind, ist nicht zwingend. Beispielsweise könnte der Betätigungsabschnitt 40 ein gesondertes Adapterteil sein, das mit dem übrigen Teil der Steuerstange 34 verschraubt ist. Auch könnte der Steuerschieber 4 selbst konstruktiv so ausgebildet sein, dass er aus der das Federgehäuse bildenden Endkappe 30 herausragt und selbst als Betätigungsteil für die Notbetätigung nutzbar ist. Da, wie erwähnt, durch die Abdichtung des Steuerschiebers 4 mittels der am Gehäuseende vorgesehenen Dichtelemente 8 der Innenraum 38 der Endkappe 30, anders als bei hydraulisch vorgesteuerten Systemen, nicht unter Druck steht, kann an der Herausführung der Steuerstange 34 aus der Endkappe ein einfacher Dichtring 42 vorgesehen sein, da lediglich eine Abdichtung gegen Spritzwasser oder Schmutzeintrag von außen her vorgesehen sein muss.

## Patentansprüche

1. Ventil mit einem Schrittmotor (2) und einem in einem Ventilgehäuse (6) längsverfahrbar geführten Steuerschieber (4), der mehrere Fluidanschlussstellen (P, T, A, B) im Ventilgehäuse (6) wahlweise fluidführend miteinander verbindet oder voneinander trennt und der mittels des Schrittmotors (2) elektrisch ansteuerbar ist, wobei der Steuerschieber (4) mittels einer Noteinrichtung (34, 52) im Stör- oder Versagensfall betätigbar ist und wobei der Steuerschieber (4) an seinem einen freien Ende mit einer Steuerstange (34) der Noteinrichtung (34,52) verbunden ist, die aus dem Ventilgehäuse (6) herausgeführt mit ihrem freien Ende eine Betätigung von Hand ermöglicht, **dadurch gekennzeichnet, dass** der Steuerschieber (4) für die Ventilbetätigung mittels des Schrittmotors (2) zwischen einer Zahnstange (12) des Schrittmotors (2) und der Steuerstange (34) der Noteinrichtung im Ventilgehäuse (6) verfahrbar aufgenommen ist, dass die Zahnstange (12) mit einem mit dem Schrittmotor (2) gekoppelten Zahnritzel (14) in Zahneingriff ist und dass die Betätigung von Hand vorzugsweise über einen am freien Ende der Steuerstange (34) angeordneten Notfallknopf (52) ermöglicht wird.

2. Ventil nach Anspruch 1, **dadurch gekennzeichnet, dass** die Steuerstange (34) der Noteinrichtung einen Energiespeicher, insbesondere in Form einer Druckfeder (44), durchgreift, die sich mit ihrem einen freien Ende an einer Führung (24, 26) des Steuerschiebers (4) oder Teilen (26) davon und sich mit ihrem anderen Ende an einer Aufnahmehülse (46) abstützt, die gleichfalls von der Steuerstange (34) durchgriffen ist.

3. Ventil nach Anspruch 2, **dadurch gekennzeichnet, dass** die Aufnahmehülse (46) an ihrem einen freien Ende eine Querschnittsverringerung (51) aufweist, die eine Anschlagstelle für die Steuerstange (34) der Noteinrichtung (34, 52) bildet, die, mit einer Querschnittsverbreiterung (50) versehen, gegen die Anschlagstelle verfahrbar in einer Endkappe (30) des Ventilgehäuses (6) geführt ist.

4. Ventil nach Anspruch 3, **dadurch gekennzeichnet, dass** die axiale Länge der Aufnahmehülse (46) derart gewählt ist, dass mit Erreichen der Anschlagstelle durch die Steuerstange (34) der Steuerschieber (6) in seine die Fluidanschlussstellen (P, T, A, B) im Ventilgehäuse (6) voneinander trennende Sperrstellung gelangt.

5. Ventil nach Ansprüchen 3-4, **dadurch gekennzeichnet, dass** die axiale Länge der Aufnahmehülse (46) derart gewählt ist, dass mit Bewegen der Querschnittsverbreiterung (50) der Steuerstange (34) vom Schrittmotor (2) weg der Steuerschieber (4) entgegen der Wirkung des Energiespeichers (44) eine weitere von der Sperrstellung verschiedene Betriebsstellung einnimmt, in der zumindest ein Teil der Fluidanschlussstellen (P→B, A→T) miteinander verbunden ist.

6. Ventil nach Ansprüchen 3-5, **dadurch gekennzeichnet, dass** bei einer Bewegung der Steuerstange (34) auf den Schrittmotor (2) zu mittels der an der Anschlagstelle anliegenden Querschnittsverbreiterung (50) die Aufnahmehülse (46) entgegen der Wirkung des Energiespeichers (44) von ihrer weiteren Anschlagposition an der Endkappe (36) abhebt und der Steuerschieber (4), der Bewegung der Steuerstange (34) nachfolgend, in eine weitere Betriebsstellung gelangt, die von der Sperrstellung und der einen Betriebsstellung verschieden ist, in der zumindest ein Teil der Fluidanschlussstellen (P→A, B→T) miteinander verbunden ist.

7. Ventil nach Ansprüchen 2-6, **dadurch gekennzeichnet, dass** der Steuerschieber (4) eine Führung (24, 26) durchgreift, die, zweiteilig ausgebildet, mit einem Führungsteil (24) der endseitigen Längsführung des Steuerschiebers (4) in diesem Bereich dient und mit einer sich am Führungsteil (24) abstützenden Steuerscheibe (26) ein Widerlager für die Abstützung des einen Endes des Energiespeichers (44) der Noteinrichtung bildet.

8. Ventil nach einem der vorstehenden Ansprüche, **dadurch gekennzeichnet, dass** es als 4/3-Wege-Schieberventil konzipiert ist und dass hierfür das Ventilgehäuse (6) Fluidanschlussstellen in Form eines Druckversorgungsanschlusses (P), zweier Tankanschlüsse (T) und zweier Nutzanschlüsse (A, B) aufweist.

## Claims

1. A valve with a step motor (2) and a control slide (4) guided in a valve housing (6) so as to be longitudinally movable, which control slide selectively connects a plurality of fluid connection points (P, T, A, B) in the valve housing (6) to each other in a fluid-conducting manner or disconnects said fluid connection points from each other and can be electrically controlled by means of the step motor (2), wherein the control slide (4) can be actuated by means of an emergency device (34, 52) in the event of a malfunction or failure and wherein the free end of the control slide (4) is connected to a control rod (34) of the emergency device (34, 52), which makes possible a manual actuation when free end thereof is guided out of the valve housing (6), **characterised in that** the control slide (4) is movably mounted between a toothed rack (12) of the step motor (2) and the control rod (34) of the emergency device in the valve housing (6) for the valve actuation by means of the step rotor (2), that the toothed rack (12) is engaged with a toothed pinion (14) coupled to the step motor (2) and that the manual actuation is made possible preferably via an emergency button (52) arranged at the free end of the control rod (34).

2. The valve according to claim 1, **characterised in that** the control rod (34) of the emergency device passes through an energy storage device, in particular in the form of a compression spring (44), the one free end of which is supported by a guide (24, 26) of the control slide (4) or parts (26) thereof and the other end of which rests on a mounting sleeve (46), which is also penetrated by the control rod (34).

3. The valve according to claim 2, **characterised in that** the mounting sleeve (46) has a reduction of cross-section (51) at its free end, which reduction forms an end stop for the control rod (34) of the emergency device (34, 52), which, provided with an enlargement of cross-section (50), is guided in an end cap (30) of the valve housing (6) so as to be displaceable against the end stop.

4. The valve according to claim 3, **characterised in that** the axial length of the mounting sleeve (46) is selected such that, when the control rod (34) reaches the end stop, the control slide (6) attains its blocking position, separating the fluid connection points (P, T, A, B) in the valve housing (6) from one another.

5. The valve according to claims 3-4, **characterised in that** the axial length of the mounting sleeve (46) is selected such that, upon movement of the enlargement of cross-section (50) of the control rod (34) away from the step motor (2), the control slide (4) assumes a further operating position, different from the blocking position and opposed to the effect of the energy storage device (44), in which at least a part of the fluid connection points (P→B, A→T) are connected to one another.

6. The valve according to claims 3-5, **characterised in that**, upon a movement of the control rod (34) towards the step motor (2), the mounting sleeve (46) is lifted from its further stop position at the end cap (36) by means of the enlargement of cross-section (50) bearing on the end stop against the effect of the energy storage device (44) and, subsequent to the movement of the control rod (34), the control slide (34) reaches a further operating position, which is different from the blocking position and the one operating position, in which at least a part of the fluid connection points (P→A, B→T) are connected to one another.

7. The valve according to claims 2-6, **characterised in that** the control slide (4) passes through a guide (24, 26) which, being designed in two parts, serves with a guide part (24) for end-side longitudinal guiding of the control slide (4) in this region and forms, with a control disk (26) supported by the guide part (24), a support for supporting the one end of the energy storage device (44) of the emergency device.

8. The valve according to one of the preceding claims, **characterised in that** it is designed as a 4/3-way sliding valve and that the valve housing (6) has for this purpose fluid connection points in the form of a pressure supply port (P), two tank ports (T) and two service ports (A, B).

## Revendications

1. Soupape comprenant un moteur (2) pas à pas et un tiroir (4) de distribution, qui est guidé de manière à pouvoir se déplacer longitudinalement dans un corps (6) de la soupape et qui, au choix, met en communication fluidiquement ou sépare les uns des autres plusieurs points (P, T, A, B) de raccordement de fluide du corps (6) de la soupape et qui peut être commandée électriquement au moyen du moteur (2) pas à pas, le tiroir (4) de distribution pouvant, en cas de perturbation ou de défaillance, être actionné au moyen d'un dispositif (34, 52) d'urgence et dans lequel le tiroir (4) de distribution est relié à sa une extrémité libre à une barre (34) de commande du dispositif (34, 52) d'urgence qui, sortie du corps (6) de la soupape, rend possible, par son extrémité libre, un actionnement à la main, **caractérisée en ce que** le tiroir (4) de distribution est, pour l'actionnement de la soupape au moyen du moteur (2) pas à pas, reçu de manière à pouvoir se déplacer dans le corps (6) de la soupape entre une crémaillère (12) du moteur (2) pas à pas et la barre (34) de commande du dispositif d'urgence, **en ce que** la crémaillère (12) engrène avec un pignon (14) accouplé au moteur (2) pas à pas, et **en ce que** l'actionnement à la main est rendu possible, de préférence par un bouton (52) en cas d'urgence, disposé à l'extrémité libre de la barre (34) de commande.

2. Soupape suivant la revendication 1, **caractérisée en ce que** la barre (34) de commande du dispositif d'urgence passe à travers un accumulateur d'énergie, notamment sous la forme d'un ressort (44) de compression, qui, par l'une de ses extrémités libres, s'appuie sur un guidage (24, 26) du tiroir (4) de distribution ou de parties (26) de celui-ci et s'appuie, par son autre extrémité, sur un manchon (46) de réception traversé également par la barre (34) de commande.

3. Soupape suivant la revendication 2, **caractérisée en ce que** le manchon (46) de réception a, à l'une de ses extrémités libres, une diminution (51) de la section transversale, qui forme un point de butée pour la barre (34) de commande du dispositif (34, 52) d'urgence, qui, pourvue d'un agrandissement (50) de la section transversale, est guidée en pouvant se déplacer vers le point de butée dans un capot (30) d'extrémité du corps (6) de la soupape.

4. Soupape suivant la revendication 3,
**caractérisée en ce que** la longueur axiale du manchon (46) de réception est choisie de manière à ce que, lorsque le pont de butée est atteint par la barre (34) de commande, le tiroir (4) de distribution arrive dans sa position de blocage séparant les uns des autres les points (PTAB)de raccordement de fluide du corps (6) de la soupape.

5. Soupape suivant les revendications 3 à 4,
**caractérisée en ce que** la longueur axiale du manchon (46) de réception est choisie de manière à ce qu'au fur et à mesure que l'agrandissement (50) de la section transversale de la barre (34) de commande s'éloigne du moteur (2) pas à pas, le tiroir (4) de distribution prenne, à l'encontre de l'effet de l'accumulateur (44) d'énergie, une autre position de fonctionnement, différente de la position de blocage, dans laquelle au moins une partie des points (P→B, A→T) de raccordement de fluide communiquent entre eux.

6. Soupape suivant les revendications 3 à 5,
**caractérisée en ce que**, lorsque la barre (34) de commande se rapproche du moteur (2) pas à pas au moyen de l'agrandissement (50) de section transversale s'appliquant au point de butée, le manchon (46) de réception quitte, à l'encontre de l'effet de l'accumulateur (44) d'énergie, son autre position de butée sur le capot (36) d'extrémité et le tiroir (4) de distribution, en suivant le déplacement de la barre (34) de commande, arrive dans une autre position de fonctionnement, qui est différente de la position de blocage et de la une position de fonctionnement et dans laquelle au moins une partie des points (P→A, B→T) de raccord de fluide communiquent entre eux.

7. Soupape suivant les revendications 2 à 6,
**caractérisée en ce que** le tiroir (4) de distribution pénètre dans un guidage (24, 26), qui, constitué en deux parties, sert, par une partie (24) de guidage, au guidage longitudinal du côté d'extrémité du tiroir (4) de distribution dans cette région et, par un disque (26) de commande s'appuyant sur la partie (24) de guidage, forme une butée pour l'appui de la une extrémité de l'accumulateur (44) d'énergie du dispositif d'urgence.

8. Soupape suivant l'une des revendications précédentes, **caractérisée en ce qu'**elle est conçue en vanne à tiroir à 4/3 voies et **en ce que**, pour cela, le corps (6) de la soupape a des points de raccordement de fluide sous la forme d'un raccord (P) d'alimentation en pression de deux raccords (T) de réservoir et de deux raccords (A, B) utiles.
